# EUROPEAN PATENT SPECIFICATION

(11) **EP 2 004 294 B1**
(45) Date of publication and mention of the grant of the patent: **21.07.2010**
(21) Application number: 06742929.0
(22) Date of filing: 13.04.2006
(51) Int. Cl.: A62B 7/14, B64D 13/04

(54) **A RESPIRATORY GAS SUPPLY CIRCUIT FOR AN AIRCRAFT CARRYING PASSENGERS**
ATEMGASZUFUHRKREIS FÜR EIN MIT PASSAGIEREN BESETZTES FLUGZEUG
CIRCUIT D'ALIMENTATION EN GAZ RESPIRATOIRE DESTINE A UN AVION TRANSPORTANT DES PASSAGERS

(43) Date of publication of application: 24.12.2008
(73) Proprietor: INTERTECHNIQUE, 78373 Plaisir Cedex (FR)
(72) Inventor: AUBONNET, Séverine, F-78220 Viroflay (FR); GRETER, Vincent, F-78310 Maurepas (FR)
(74) Representative: Cabinet Plasseraud
(86) International application number: PCT/EP2006/004584
(87) International publication number: WO 2007/118494

(56) References cited:
- EP-A- 1 579 890
- WO-A-2006/005372
- FR-A1- 2 406 246
- US-A- 3 675 649
- US-A- 4 690 163
- US-A1- 2003 084 901

## Description

The present invention relates to a respiratory gas supply circuit for protecting the passengers of an aircraft against the risks associated with depressurization at high altitude and/or the occurrence of smoke in the cockpit.

To ensure the safety of the passengers in case of a depressurization accident or the occurrence of smoke in the aircraft, aviation regulations require on board all airliners a safety oxygen supply circuit able to supply each passenger with an oxygen flow rate function of the aircraft altitude.

In other words, the source of gas under pressure must be capable of instantly delivering oxygen or air greatly enriched in oxygen at a pressure sufficient for feeding the passengers.

Current systems are mainly pneumatic systems, regulating the pressure of the supplied oxygen thanks to a reducing valve operating as a function of the cabin pressure, or cabin altitude. By cabin altitude, one may understand the altitude corresponding to the pressurized atmosphere maintained within the cabin. This value is different than the aircraft altitude which is its actual physical altitude.

Such a pneumatic system is known from FR2646780. The described supply circuit allows an altitude-dependent regulation of the flow of respiratory gas fed to passengers through an orifice provided on breathing masks and comprises high-pressure oxygen reservoirs, a pressure regulator, and a valve. The valve is an altitude-dependent valve with an on/off functioning and does not provide any regulating function. The regulation of the oxygen flow is ensured individually for each cluster of breathing masks thanks to regulation means comprising an altimetric cell acting on a movable leak proof membrane.

The known pneumatic supply circuits generally lack a feedback loop, and are oversized as far too much oxygen is supplied to the mask wearers to ensure that the oxygen flow rate matches the regulatory minimums.

Therefore, individual mask regulators are known from the prior art. Document WO 2006/005 372 A1, being the closest prior art and disclosing the preamble of the independent claim 1, shows such a mask regulator.

An object of the present invention is to provide an improved respiratory gas supply circuit that is simple, reliable and does not present the drawbacks from the known systems. An additional object of the present invention is to provide a supply circuit with a feedback loop that optimizes the need in respiratory gas and thus limit the onboard mass of breathing gas.

To this end, there is provided a respiratory gas supply circuit for an aircraft carrying passengers as claimed in claim 1.

The pulse width modulation (PWM) signal allows an easy piloting of the electro valve, which is a reliable regulating device.

The above features, and others, will be better understood on reading the following description of particular embodiments, given as non-limiting examples. The description refers to the accompanying drawing.
FIG. 1 is a simplified view of a respiratory gas supply circuit for an aircraft carrying passengers according to a first embodiment of the invention;
FIG. 2 is a simplified view of a respiratory gas supply circuit for an aircraft carrying passengers according to a second embodiment of the invention, and;
FIG. 3 is an example of a PWM signal.

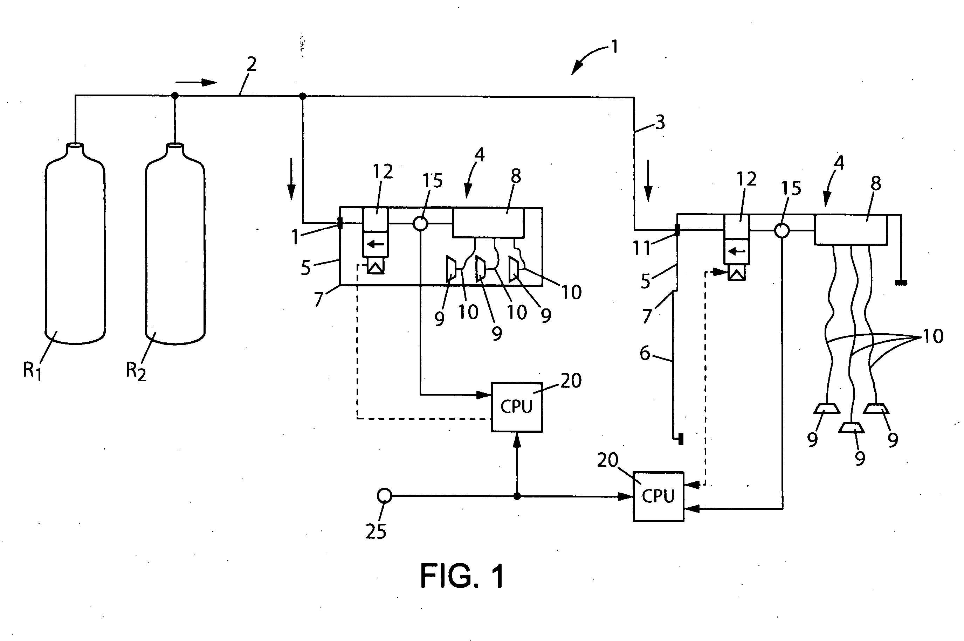

As seen on FIG. 1, the supply circuit according to the invention comprises the hereafter elements. A source of pressurized respiratory or breathable gas, here a couple of oxygen tanks R1 and R2 each comprising a reducing valve on their respective outlet, is provided to deliver through a supply line 2 a respiratory gas to the passengers of the aircraft. Other sources of pressurized breathable gas may be used in the supply circuit according to the invention. A plurality of secondary feedlines 3 is connected between supply line 2 and clusters 4 of respiratory masks 9. Each cluster 4 of masks 9 may be provided in an enclosure 5 placed over the passengers' seats. The enclosure 5 may comprise a junction 11 of feedline 3 into said box, a door 6 articulated around hinge 7 (and seen closed in the central cluster, and open in the right hand side cluster), and a connecting casing 8 that connects feedline 3 with the respiratory masks 9 thanks to flexible pipes 10. The breathable gas is generally supplied to its wearer through an orifice within said mask.

A regulating device 12 is further provided, for example within enclosure 5, to control the supply in respiratory gas to the masks and the passengers. In the supply circuit according to the first implementation of the invention, the regulating device 12 comprises an electro-valve controlled by a pulse with modulation signal provided by an electronic unit.

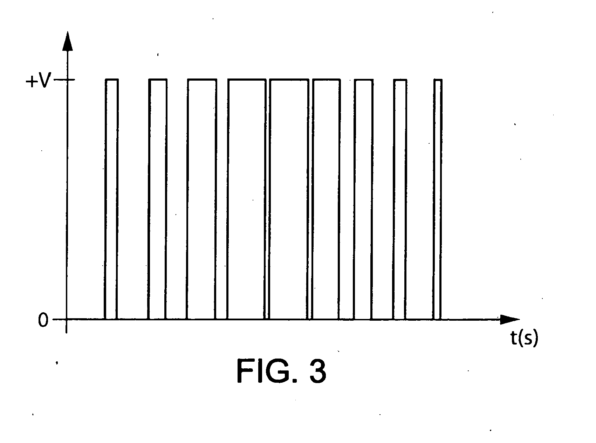

Pulse width modulation (PWM) is a powerful technique for controlling analog circuits with a microprocessor's (CPU) digital outputs. PWM is employed in a wide variety of applications, ranging from measurement and communications to power control and conversion. Pulse-width modulation control works by switching the power supplied to the electro-valve on and off very rapidly and at a varying frequency. A DC voltage is converted to a square-wave signal, alternating between fully on (e.g. nearly 12V or 18V) and zero, giving the valve a series of power "kicks" of varying length. An example of such a signal is shown in FIG. 3.

To that effect an electronic unit 20, or CPU, is provided to elaborate the PWM signal sent to electro-valve 12, as seen in doted lines for both clusters 4 of masks. A first pressure sensor 25 is provided in the cabin of the aircraft to supply a first pressure signal to the CPU 20 for elaborating a set point to control the electro-valve 12. Pressure sensor 25 measures the cabin pressure, and allows the supply in respiratory gas as a function of the cabin altitude, so that the regulations oxygen supply curves are ensured. The pressure sensor 25 may be one of the pressure sensors available in the aircraft, its value being available upon connection to the aircraft bus. In order to ensure a reliable reading of the pressure independent of the aircraft bus system, the circuit according to the invention may be provided with its own pressure sensor, i.e. a sensor 25 is provided for each electronic unit 20.

A second pressure sensor 15 is provided on the supply line downstream the regulating device 12, i.e. in the example of FIG. 1 within the enclosure 5 between electro-valve 12 output and connecting casing 8, to supply a second pressure signal to the CPU 20 that corresponds to the regulated pressure. Second pressure sensor 15 allows a feedback loop to ensure that the right supply in oxygen follows the demand from the passengers when wearing the masks.

To that effect, the electronic unit 20 compares the set point to the regulated pressure, i.e. the value of sensor 15 to elaborate the PWM signal.

A PID module (proportional, integral, derivative) may be comprised within electronic unit 20 to elaborate the PWM signal from the comparison of the set point and the regulated pressure.

In an additional embodiment, electro-valve 12 is a solenoid valve. More precisely, in a preferred embodiment, electro-valve 12 is a two position on/off solenoid valve, with a variable duty ratio. Such a valve is particularly suited to be driven by the PWM signal sent by CPU 20. The valve may also be a piezo electric valve. In the first implementation of the supply circuit according to the invention, valve 12 is provided on the supply line, and directly opens and cuts off the supply in respiratory gas. More precisely, in the illustration of FIG. 1, valve 12 is provided within the box 5 between junction 11 and connecting casing 8.

The first implementation of the invention is particularly well suited to drive a cluster of masks locally through the regulating device 12. Each cluster 4 is attached to its own regulating device. This ensures that if for some reasons one cluster fails, its does not affect the other clusters that carry on the supply in respiratory gas.

In the first implementation, the electro-valve 12 directly drives the supply in breathable gas as valve 12 is located on supply line 3.

The regulating means or the pressure sensor 15 may be advantageously located close to the cluster of masks. By a close location, one may understand a location on the supply line wherein the pressure loss between each mask and the regulating device, or the pressure sensor respectively, is negligible.

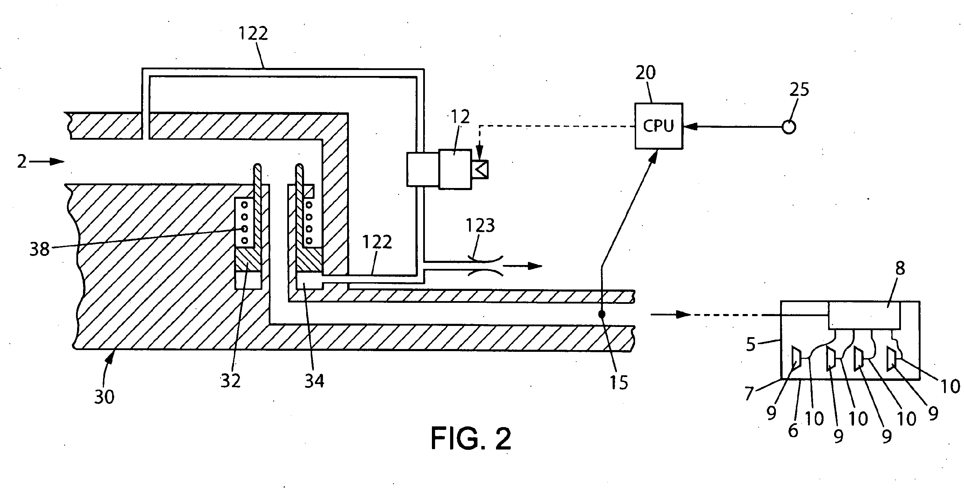

The second implementation of the supply circuit according to the invention is illustrated in FIG. 2. Unless written otherwise, the same numbers refer to the same parts.

The regulating device comprises a flow amplifier 30 provided on the supply line 2 connecting a source of pressurized breathable gas (not shown) to a plurality of respiratory masks 9 provided for example within an enclosure 5 as described for the previous embodiment. The flow amplifier 30 further comprises a piston 32, e.g. an annular piston, subjected to the pressure difference between the ambient pressure and the pressure that exists inside a piston chamber 34. An electro-valve 12, e.g. specifically a solenoid valve, serves to connect the piston chamber 34 to the pressurized respiratory gas through pipe 122. Chamber 34 may also be connected to the ambient pressure in the cabin through pipe 123.

Electro-valve 12 thus serves to vary the pressure within chamber 34 so that piston 32 is movable between a first position wherein the supply line is open (piston 32 is kept away from supply line 2 inner section) and a second position wherein the supply line is closed (piston is pushed to close an inner section of supply line 2). Piston 32 is movable in response to the outlet pressure of the two positions on/off solenoid valve 12, its inlet being connected to the source of pressurized respiratory gas.

When the piston chamber 34 is connected to the cabin ambient pressure, i.e. solenoid valve 12 is off, and the pressure in chamber 34 is maintained to the cabin ambient pressure thanks to pipe 123, a spring 38 holds piston 32 in a position away from closing supply line 2. When solenoid valve 12 is on, chamber 34 is connected to the pressurized source of respiratory gas through pipe 122. A narrow section may be provided on pipe 123 so that its section is insufficient to lower the pressure in chamber 34 when solenoid valve 12 is on.

Electro-valve 12 is controlled through CPU 20 that sends a PWD signal that can be elaborated thanks to the first pressure sensor 25 provided in the cabin of the aircraft and/or thanks to the second pressure sensor 15 provided downstream the regulating device as described before.

The second implementation of the invention allows to drive a large number of masks through the regulating device thanks to the flow amplifier 30.

In the second implementation, as the demand in breathable gas may be larger and the pressure loses along supply line 3 larger, a flow amplifier 30 is required. The supply in breathable gas is driven indirectly by valve 12 as a result of valve 12 piloting piston 32.

The invention allows to control the volume of breathable gas supplied to the masks. The successive opening and closing cycles of the regulating means lead to a controlled average volume or "integrated" volume of breathable gas downstream the regulating means. The average volume creates a pressure P that is measured thanks to pressure sensor 15. Based on the cabin altitude, a breathable gas must be fed to the mask at a pressure set point value. The PWM signal is elaborated by the electronic unit to pilot the regulating means to deliver said breathable gas at said pressure set point value.

The time between pulses and/or the length of each pulse may vary to ensure the right volume of breathable gas fed to the masks, based on the feedback loop and the set point.

The respiratory gas supply circuit according to the invention is particularly well suited to be associated to a rebreathing bag as known from US 2003,101,997. Such a document discloses a respiratory mask for protecting passengers of an airplane against depressurization of an airplane cabin at high altitude, the mask being provided on a respiratory supply circuit comprising a feed control unit for supplying an adjustable continuous flow rate to a general pipe from a source of respiratory gas under pressure. The masks are further connected to said general pipe via a flexible economizer bag. Furthermore, a flexible re-breathing bag is connected to each of said mask by means enabling gas to enter freely into the flexible re-breathing bag from the mask and retarding re-breathing from said flexible re-breathing bag after beginning of breathing in by one of said passengers bearing the mask. The re-breathing bag has preferable a volume when inflated such that it is capable to store only an initial fraction of the gas breathed out on each exhalation by the passenger wearing the mask. The control unit of US 2003,101,997 further has means for regulating the flow rate of additional oxygen delivered to said pipe responsive to ambient pressure to which the mask wearers are subjected in order to limit said flow rate to a fraction only of the flow rate that would be necessary in the absence of re-breathing.

## Claims

1. A respiratory gas supply circuit for an aircraft carrying passengers, comprising a pressurized source of breathable gas (R1, R2) and a supply line (2, 3), said circuit further comprising on said supply line a regulating device (12, 30), **characterized in that** said regulating device further comprises an electro-valve (12) for controlling the supply in breathable gas to a plurality of respiratory masks for said passengers,
wherein said electro-valve (12) is controlled by a pulse width modulation signal provided by an electronic unit (20).

2. A circuit according to the previous claim, wherein the electro-valve is a solenoid valve (12).

3. A circuit according to one of the previous claims 1 or 2, wherein the solenoid valve is a two position on/off solenoid valve (12), with a variable duty ratio.

4. A circuit according to one of the previous claims, further comprising a first pressure sensor (25) provided in the cabin of the aircraft, to supply a first pressure signal to the electronic unit for elaborating a set point to control the electro-valve.

5. A circuit according to the one of the previous claims, wherein a second pressure sensor (15) is provided on the supply line downstream the regulating device, to supply a second pressure signal to the electronic unit corresponding to the regulated pressure.

6. A circuit according to claims 4 and 5, wherein the electronic unit compares the set point to the regulated pressure to elaborate the pulse width modulation signal.

7. A circuit according to the previous claim, wherein the electronic device comprises a PID module to elaborate the pulse width modulation signal.

8. A circuit according to one of the previous claims 3 to 7, wherein the electro-valve is provided on the supply line to either switch on or off the supply in breathable gas in response to the pulse width modulation signal provided by the electronic unit.

9. A circuit according to one of the previous claims 3 to 7, wherein the inlet of the solenoid valve is connected to the pressurized source of respiratory gas, said circuit further comprising a piston (32) movable between a first position wherein the supply line is open and a second position wherein the supply line is closed, said piston being movable in response to the outlet pressure of the two position on/off solenoid valve.

## Patentansprüche

1. Atemgaszufuhrkreis für ein mit Passagieren besetztes Flugzeug, umfassend eine mit Druck beaufschlagte Quelle eines atembaren Gases (R1, R2) und eine Zuführungsleitung (2, 3), wobei der besagte Kreis ferner eine Regelungsvorrichtung (12, 30) an der besagten Zuführungsleitung umfasst, **dadurch gekennzeichnet, dass** die besagte Regelungsvorrichtung ferner ein Elektroventil (12) zur Kontrolle der Zufuhr von atembaren Gas zu einer Vielzahl von Atemmasken für die besagten Passagiere umfasst, wobei das besagte Elektroventil (12) durch eine mittels einer elektronischen Einheit (20) bereitgestellten Pulsweitenmodulation gesteuert wird.

2. Ein Kreis gemäß dem vorhergehenden Anspruch, wobei das Elektroventil ein Magnetventil (12) ist.

3. Ein Kreis gemäß einem der vorhergehenden Ansprüche 1 oder 2, wobei das Magnetventil ein Zweipunkt-an/aus-Magnetventil (12) mit einer variablen relativen Einschaltdauer ist.

4. Kreis gemäß einem der vorhergehenden Ansprüche, ferner umfassend einen ersten Drucksensor (25), der in der Kabine des Flugzeugs bereitgestellt ist, um ein erstes Drucksignal an die elektronische Einheit zu liefern, um einen Sollwert zur Regelung des Elektroventils auszuarbeiten.

5. Kreis gemäß einem der vorhergehenden Ansprüche, wobei ein zweiter Drucksensor (15) an der Zuführungsleitung unterhalb der Regelungsvorrichtung bereitgestellt ist, um ein zweites Drucksignal an die elektronische Einheit zu liefern, das dem geregelten Druck entspricht.

6. Kreis gemäß den Ansprüchen 4 und 5, wobei die elektronische Einheit den Sollwert mit dem geregelten Druck vergleicht, um das Pulsweitenmodulationssignal auszuarbeiten.

7. Kreis gemäß dem vorhergehenden Anspruch, wobei die elektronische Vorrichtung ein PID-Modul umfasst, um das Pulsweitenmodulationssignal auszuarbeiten.

8. Kreis gemäß einem der vorhergehenden Ansprüche 3 bis 7, wobei das Elektroventil an der Zuführungsleitung bereitgestellt ist, um die Zufuhr von atembaren Gas als Antwort auf das durch die elektronische Einheit bereitgestellte Pulsweitenmodulationssignal entweder an- oder auszuschalten.

9. Kreis gemäß einem der vorhergehenden Ansprüche 3 bis 7, wobei der Einlass des Magnetventils mit der druckbeaufschlagten Quelle des Atemgases verbunden ist, wobei der besagte Kreis ferner einen Kolben (32) umfasst, welcher zwischen einer ersten Position, in der die Zuführungsleitung offen ist, und einer zweiten Position, in der die Zuführungsleitung geschlossen ist, bewegt werden kann, wobei der besagte Kolben in Antwort auf den Auslassdruck des Zweipunkt-an/aus-Magnetventils bewegt werden kann.

## Revendications

1. Circuit d'alimentation en gaz respiratoire pour un avion transportant des passagers, comprenant une source sous pression de gaz respirable (R1, R2) et une conduite d'alimentation (2, 3), ledit circuit comprenant en outre, sur ladite conduite d'alimentation, un dispositif de régulation (12, 30), **caractérisé en ce que** ledit dispositif de régulation comprend en outre une électrovanne (12) pour commander la fourniture de gaz respirable à une pluralité de masques respiratoires pour lesdits passagers,
dans lequel ladite électrovanne (12) est commandée par un signal de modulation de durée d'impulsion fourni par une unité électronique (20).

2. Circuit selon la revendication précédente, dans lequel l'électrovanne est une vanne à solénoïde (12).

3. Circuit selon l'une des revendications 1 ou 2 précédentes, dans lequel la vanne à solénoïde est une vanne à solénoïde (12) tout ou rien à deux positions, avec un rapport cyclique variable.

4. Circuit selon l'une des revendications précédentes, comprenant en outre un premier capteur de pression (25) prévu dans la cabine de l'avion, pour délivrer un premier signal de pression à l'unité électronique pour élaborer un point de consigne pour commander l'électrovanne.

5. Circuit selon l'une des revendications précédentes, dans lequel un deuxième capteur de pression (15) est prévu sur la conduite d'alimentation en aval du dispositif de régulation, pour délivrer un deuxième signal de pression à l'unité électronique correspondant à la pression régulée.

6. Circuit selon les revendications 4 et 5, dans lequel l'unité électronique compare le point de consigne à la pression régulée pour élaborer le signal de modulation de durée d'impulsion.

7. Circuit selon la revendication précédente, dans lequel le dispositif électronique comprend un module PID pour élaborer le signal de modulation de durée d'impulsion.

8. Circuit selon l'une des revendications 3 à 7 précédentes, dans lequel l'électrovanne est prévue sur la conduite d'alimentation pour activer ou désactiver la fourniture de gaz respirable en réponse au signal de modulation de durée d'impulsion délivré par l'unité électronique.

9. Circuit selon l'une des revendications 3 à 7 précédentes, dans lequel l'entrée de la vanne à solénoïde est reliée à la source sous pression de gaz respiratoire, ledit circuit comprenant en outre un piston (32) capable de se déplacer entre une première position, dans laquelle la conduite d'alimentation est ouverte, et une deuxième position, dans laquelle la conduite d'alimentation est fermée, ledit piston étant capable de se déplacer en réponse à la pression de sortie de la vanne à solénoïde tout ou rien à deux positions.
